# EUROPEAN PATENT SPECIFICATION

(11) **EP 3 142 919 B1**
(45) Date of publication and mention of the grant of the patent: **20.11.2019**
(21) Application number: 15711874.6
(22) Date of filing: 05.03.2015
(51) Int. Cl.: B62M 6/75, B62M 13/04

(54) **DEVICE FOR THE ELECTRIC PROPULSION OF A BICYCLE**
VORRICHTUNG ZUM ELEKTRISCHEN ANTRIEB EINES FAHRRADS
DISPOSITIF DE PROPULSION ÉLECTRIQUE D'UNE BICYCLETTE

(30) Priority: 15.05.2014 IT VR20140133
(43) Date of publication of application: 22.03.2017
(73) Proprietor: Tekhneloghia Srl, 37067 Valeggio Sul Mincio (VR) (IT)
(72) Inventor: SIGNORI, Sergio, I-37067 Valeggio Sul Mincio (VR) (IT); MARTINI, Matteo, I-37125 Verona (IT)
(74) Representative: Laghi, Alberto
(86) International application number: PCT/IB2015/051619
(87) International publication number: WO 2015/173660

(56) References cited:
- WO-A1-2004/094221
- CN-A- 103 496 426
- CN-Y- 2 511 599
- US-A- 2 274 043

## Description

The present invention concerns a device for the electric propulsion of a bicycle; the device is such as to not require any modifications to the constructive structure of the human-powered vehicle (the bicycle) on which is, preferably, removably installed.

The present invention also relates a bicycle comprising such a device for the electric propulsion which, for that reason, can be defined, although indirectly or even only temporarily, a pedal-assisted bicycle or electric bicycle, depending on the mode of use.

As known, an electric or pedal-assisted (also known as EPAC, English acronym for *Electric Pedal Assisted Cycle*) bicycle is a bicycle the propulsive human action to which is added that one of an auxiliary motor, generally and more diffusely and a motor of electric type.

In accordance with the European Directive 2002/24/EC, the pedal-assisted bicycle is a bicycle equipped with auxiliary electric motor having a maximum continuous nominal power of 0.25 kW, gradually reduced and then stopped at the achieving of 25 km/h motor supply and motor supply stopped before 25 km/h if the cyclist stops pedaling.

Vehicles meeting this directive do not require any type of approval and they are, therefore, considered as conventional bicycles with simple human propulsive action.

In addition to the classic components of a bicycle, the pedal-assisted bicycle includes additional components such as, basically, a motor (usually electric, as said), a battery, a battery charger, a brake (in the shape of electric switch), a control unit (or central processing unit), a pedal sensor and an indicator of the charge state of the battery which, therefore, contribute to the formation of the device for the electric propulsion of a bicycle which is oriented the present invention to.

The electric motor installed on a bicycle is typically a DC motor with voltage ranging typically in the range of values 12 to 48 Volt, integrated on the axis (or hub) of one of the two wheels, preferably though not exclusively the rear wheel, or arranged axially to the pedals through a gear and the chain transmission.

Examples of devices for the propulsion of a bicycle, reported for pure information only, are known from patent documents US2011/0168471 A1, CN202038472U, DE3532993 A1, WO2010/134793 A2 and JPH01218993A.

Other examples of devices for the propulsion of a bicycle are shown in the patent documents of the prior art published as CN2511599 Y, which shows the preamble of claim 1, US2274043 A, CN103496426 A, US3431994 A and EP0403978 A2, which describes devices for the propulsion of a bicycle providing only a transmission with a pulley, a roller or a similar rotary mechanical friction member that requires connection of an external electric motor separated from it in order to be operated.

The documents of the prior art known to the applicant and published as WO0/098724 A1 and US2009/200096 A1 describe, instead, respectively, propulsion members of a scooter and a wheelchair for disabled or sick persons forced temporarily to use it.

From the evaluation of the state of the art it is, therefore, obtained that there are different propulsion devices that make electric a bicycle: in general, the installation of an electric motor bicycle and the necessary components allow to classify these electric bicycles in two main types:
a) bicycles designed at factory and coming out from the factory production already conceived and equipped with electric motor;
b) bicycles which only indirectly and subject can be defined electric, since in their original configuration are not provided with electric motor but subsequently undergo substantial changes through the permanent installation of a mechanical kit which provides, inter alia, an electric motor.

In both cases, therefore, they are permanent solutions which, therefore, cannot return the original human propulsion to the bicycle, unless further mechanical extraordinary intervention of change, still always expensive in terms of time and cost.

In addition, and for what is more important for the purposes of the present invention, the devices for the electric propulsion of a bicycle currently available on the market are such to be mounted on a bicycle - applied to the bearing frame, the rear carrier or the front carrier - in such a way as to act on the upper part of the rear wheel or front wheel of the bicycle itself, or at least on the upper semi-arch of the wheels, as it can be also clearly deducted from the documents of the prior art mentioned above.

This situation leads to a double drawback for devices for the electric propulsion of a bicycle of the state of the art: on one hand, indeed, the known devices are not really suitable to be applied in an easy and practical way to any type of bicycle since they require a specific and dedicated modification processing, in the form of partial removal, of the protection casing applied to the wheels of a traditional bicycle, with the obvious negative impact on the aesthetic effect of the latter, as the intervention of structural modification of the protection carter is carefully carried out.

The criticality of this aspect is more emphasized for the second category of bicycles identified above (traditional bicycles transformed only later, when already in use by the end user, in pedal-assisted bicycles), since the modification and adaptation intervention of the bicycles cannot be carried out by any end user and, if decided, it however involves the obtaining of a vehicle not more reconfigurable in the version originally purchased.

At the most, the devices for the electric propulsion of a bicycle of the current state of the art are applicable without any mechanical intervention of modification or adaptation of the protective carter of the wheels to bicycles which are typically the cycling sport bicycles (on road or cycle-cross) or the mountain bikes.

A second significant drawback connected to the system with which the devices for the electric propulsion of a bicycle of the prior art are installed on the latter consists in the fact that the traction exerted by the motorization means, however effective, is not optimal because the mechanical interaction wheel/rotating motor takes place in the upper part of the wheel itself, be it the rear one or the front one.

Starting, therefore, from the knowledge of the foregoing main drawbacks of the prior art, the present invention intends to give them full remedy.

In particular, main purpose of the present invention is to provide a device for the electric propulsion of a bicycle which can be installed on any type of vehicle, of conventional type at human propulsion and already in use by the end user, in a practical, simple and accessible to any person way, without any constraint represented by the need to carried out - at design and manufacture stage of the pedal-assisted bicycle or at a later stage when the configuration of the bicycle is transformed from the pre-existing traditional one to the pedal-assisted one - invasive mechanical interventions of modification (instead typical of the prior art) of the classical constructive conception of the bicycle structure, and in particular of removal or reduction of the useful section of the protection carter of the rear wheel.

In other words, primary purpose of the invention is to provide a device for the electric propulsion of a bicycle which is suitable for all bicycles, especially those ones already in use or used by the end user, without changing or minimally altering the original structure thereof, making them electric for example due to incurred motion requirements of the user himself.

Within this purpose, it is task of the invention to conceive a device for the electric propulsion of a bicycle that allows its installation in fairly rapid times, more rapid than those ones guaranteed by equivalent devices of known type, without the aid of particular and/or complicated instruments or tools and, also, at low, at the limit null costs for people much more experienced and/or skilled in the do-it-yourself.

It is another purpose of the invention to make available a device for the electric propulsion of a bicycle which is able to impact or negatively affect the aesthetic effect of the bicycle on which is installed at a minimum extent, in any case lower than what happens with the known similar devices.

It is a further purpose of the invention to make available a device for the electric propulsion of a bicycle which is able to improve over the equivalent prior art the traction force transmitted to the bicycle wheel which is operatively connected with, thereby increasing its performance and much more facilitating the end-user in his pedaling.

It a last but not least purpose of the present invention to create a device for the electric propulsion of a bicycle which, while achieving the above purposes, presents a simple constructive conception that determines a cost competitive thereof with respect to similar devices of the prior art, labor and materials used costs, respectively, being equal.

Said purposes are achieved through a device for the electric propulsion of a bicycle according to the attached claim 1, as hereinafter referred for the sake of exposure brevity.

Other technical and construction features of detail of the device for the electric propulsion of a bicycle are contained in the corresponding dependent claims.

Also a bicycle, integral part of the invention, according to claim 16, as still hereinafter referred to for the sake of explanation simplicity, contributes to the obtaining of the aforementioned purposes.

The above-mentioned claims, hereinafter specifically and concretely defined, stand as integral part of the present description.

Advantageously, the device for the electric propulsion of the invention can be utilized by means of any bicycle without the need of any modification or adaptation of the global structure of the latter: the device of the invention allows to apply an electric propulsion resulting from an electric motor to any bicycle without altering its constructive conception and aesthetic effect, constituting a technical solution of new conception for public and private civil use.

Still advantageously, the device of the invention, completely independent for construction and, in a preferred way, for use with respect to a given bicycle, is installed on the latter in a few seconds even by a non particularly expert person, without in any case requiring the aid of any tool or instrument or without changing the overall structure of the bicycle itself.

Basically, the device of the present invention allows to quickly transform a normal human-powered vehicle, which is a bicycle, even already in use, in a human-powered bicycle with electric assistance.

This is due to the fact that in the invention, which is defined by claim 1, the articulation means, which connect the support means with the motorization means, are dimensioned in such a way as to place the latter, in the position in which they cooperate with the rear wheel of the bicycle, over the horizontal diameter defined by such a rear wheel when it is seen laterally or frontally or, in other words, at a position defining a plane forming an angle not lower than substantially 90° with the plane defined by the position of the support means on the rear part of the bicycle.

Furthermore, in advantageous manner, preferably but not necessarily, ceased the temporary use, it is possible to fold and close the propulsion device of the invention, reducing to a minimum its overall dimensions even while it still remains applied to the bicycle.

Equally advantageously, the device for the electric propulsion of a bicycle of the present invention increases compared to known similar devices the traction force transmitted to the bicycle wheel which is operatively connected with, thereby improving its performance and making the pedaling of end user even easier and less tiring.

Also in this case, such a positive technical effect determined by the invention is due to the fact that the articulation means are dimensioned in such a way as to place the motorization means, in the position in which they cooperate with the rear wheel (or possibly with the front wheel) of the bicycle, over the horizontal diameter defined by such a wheel when it is seen laterally or frontally, or at a position defining a plane forming an angle not lower than substantially 90° with the plane defined by the position of the support means on the rear part of the bicycle.

Said purposes and advantages, as well as others which will emerge below, will appear to a greater extent from the detailed description that follows, relating to a preferred embodiment of the device for the electric propulsion of a bicycle of the invention, given by indicative and illustrative, but not limitative, way with reference to the appended drawings, where:
- figure 1 is a partial assonometric view of the device for the electric propulsion of a bicycle of the invention when it assumes the applicative and operating conditions, i.e. installed on any bicycle suitable for the purpose and also subject of the invention;
- figures 2 and 3 are two different assonometric views of the device for the electric propulsion of a bicycle of figure 1 in the rest position;
- figure 4 is an assonometric view of the device for the electric propulsion of a bicycle of figure 1 in the operating position;
- figure 5 is a first constructive assembly of figure 4, in the final position in which the motorization means are in the operative position;
- figure 6 is the constructive assembly of figure 5 in an intermediate position;
- figure 7 is the constructive assembly of figure 5 in the initial position in which the motorization means are in the non-operative position;
- figure 8 is a second constructive assembly of figure 4;
- figure 9 is a partially exploded assonometric view of figure 8;
- figure 10 is an exploded assonometric view of figure 8;
- figure 11 is a truncated and partially exploded view of a first enlargement of figure 4;
- figure 12 is a truncated and partially exploded view of a second enlargement of figure 4;
- figure 13 is a truncated and partially exploded view of a third enlargement of figure 4;
- figure 14 is a truncated and exploded view of an enlarged assembly of figure 11;
- figure 15 is a partial, truncated and exploded view of figure 4 in a first operating position;
- figure 16 is the view of figure 15 in a second operating position;
- figure 17 is the exploded view of figure 4.

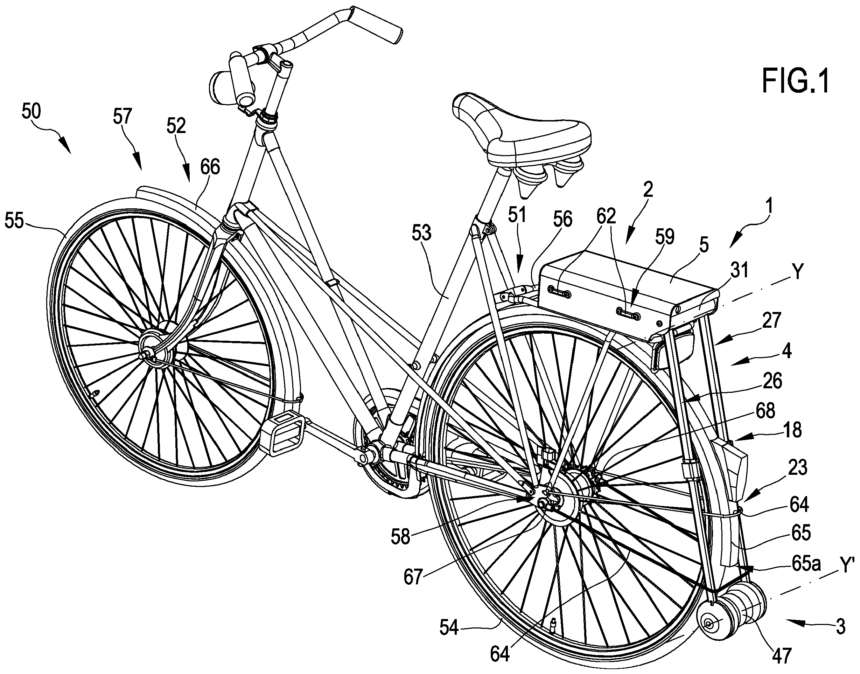

The device of the invention is illustrated in figure 1, globally numbered with 1, in applicative and operating conditions: it is used for the electric propulsion of a bicycle, identified in the case under description and in the attached figures typically as of the traditional type, visible also in figure 1 where it is overall indicated with 50.

As it can be observed, the device for the electric propulsion 1 comprises:
- support means, as a whole reported with 2, suitable to be coupled with the rear part 51 of the bearing frame 53 of the bicycle 50, in a position above the rear wheel 54 of the bicycle 50 itself which stands on a travelling surface, such as typically a road or any ground;
- motorization means, as a whole numbered with 3 and of electric motor 46 type, connected with the support means 2 and suitable to cooperate with the rear wheel 54 of the bicycle 50 for imparting, when operated, a rotary motion to the rear wheel 54 due to friction between the motorization means 3 and the rear wheel 54;
- articulation means, generally indicated with 4, by means of which the motorization means 3 are connected with the support means 2.

According to the invention, the articulation means 4 are dimensioned in such a way as to place the motorization means 3, in the position in which they cooperate with the rear wheel 54 of the bicycle 50:
- totally below the horizontal diameter, parallel to the travelling surface, defined by the rear wheel 54 when the latter is seen laterally or frontally;
- at a position in which the articulation means 4 define a plane which forms an angle not lower than substantially 90° with the plane defined by the support means 2 on the rear part 51 of the bicycle 50.

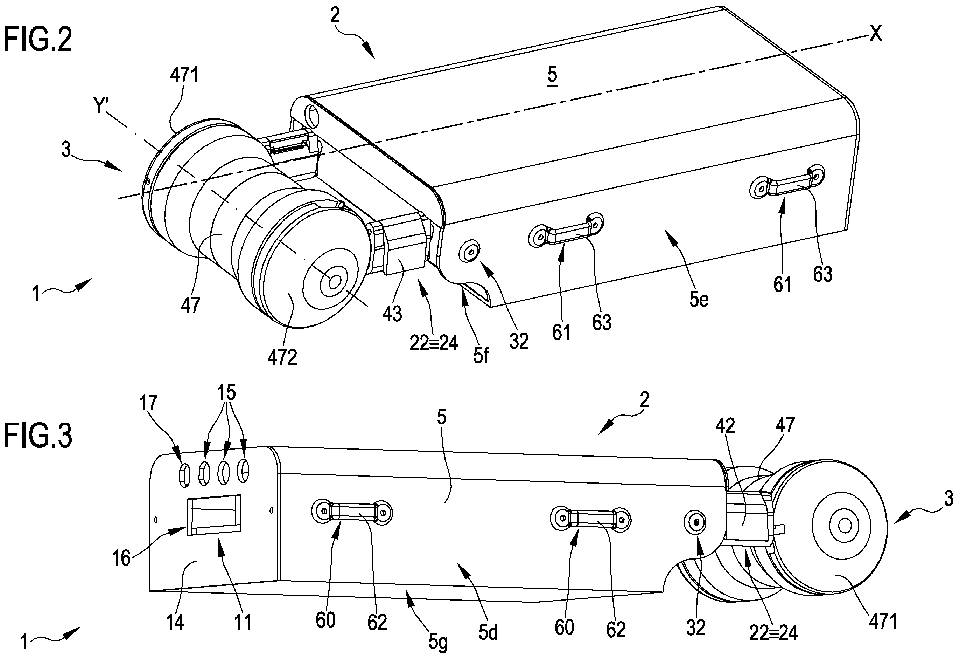

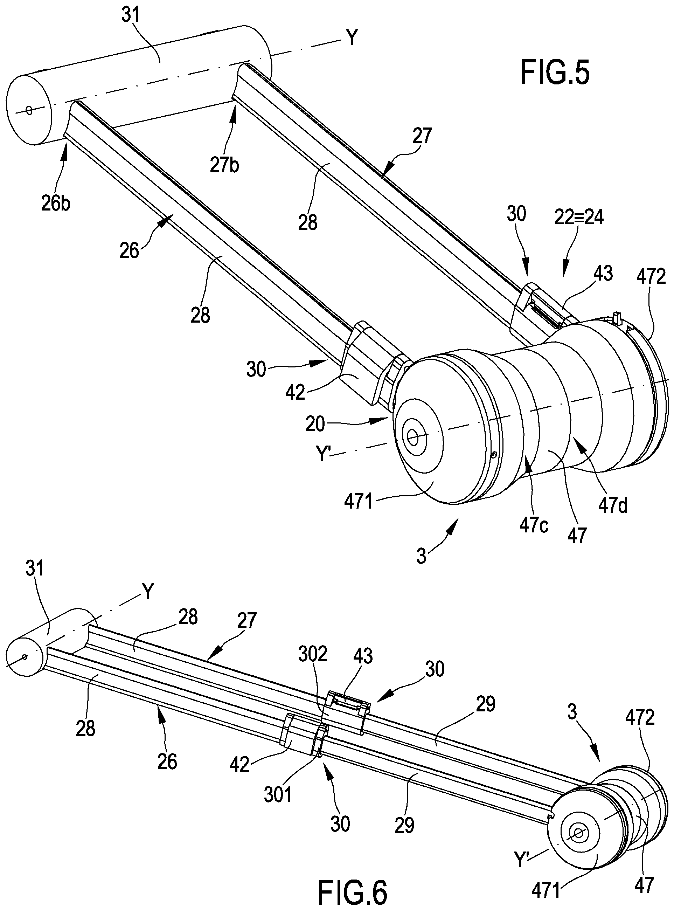

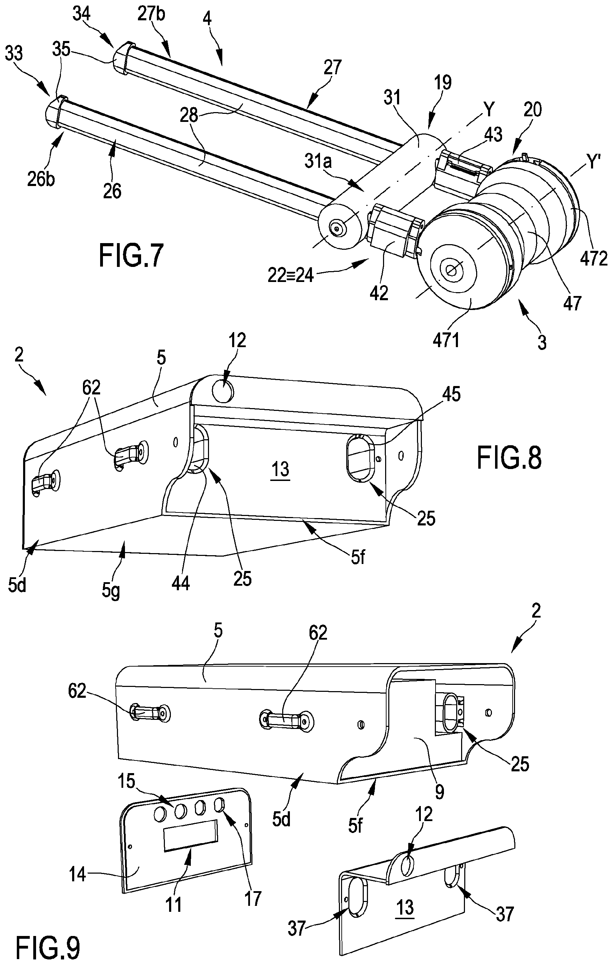

In particular, in this case the support means 2 comprise a box-shaped casing 5 which in applicative conditions is arranged close to the rear rack 56 (as in the case under description) of the bicycle 50 and having a pair of housing seats 6, 7 (in this case constituted for example by two access openings) as it can be well derived from figures 2 and 5 but with greater detail from figures 8 and 9.

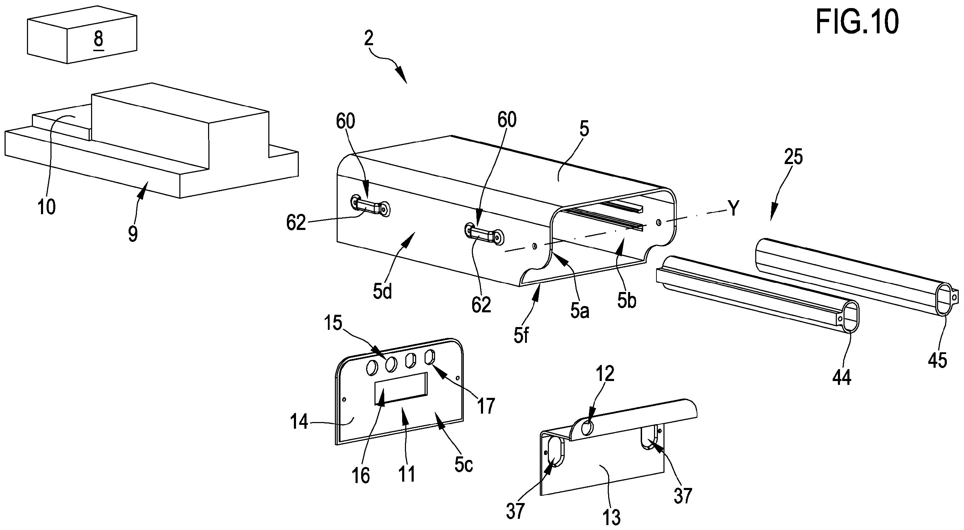

Figure 10 shows in particular that the box-shaped casing 5 contains internally the components provided by the regulations in force for a pedal-assisted bicycle, such as a control unit 8, a batteries pack 9, a BMS (abbreviation of the English expression Battery Management System) 10 and an indicator 11 of the state of charge of the batteries pack 9.

The batteries, present in pack although it is possible even the single exemplar version, are selected according to their capacity and their cost, although for this kind of applications the most expensive Lithium ions batteries are particularly suitable, since more reliable.

The pedal sensor has the function to communicate to the control unit 8 if the user of the vehicle (such as the bicycle 50) is actually pedaling: only in such a case, indeed, the motorization means 3 (such as an electric motor, as it will be better seen later) are operated, according to provisions of European regulations, particularly that one previously indicated.

The construction of the box-shaped casing 5 is thus clearly visible in figures 8-10 which highlight the constituent elements thereof: in particular, figure 8 shows a first through hole 12, made in the front panel 13, through which the cable connection with the motorization means 3 passes.

In the figures mentioned so far, it is also illustrated that the rear panel 14 of the box-shaped casing 5 presents three through holes 15 close each other through which pass respectively:
- the cable of electrical connection to the accelerator;
- the cable of electrical connection to the front and rear brakes;
- the cable of electrical connection to the pedals.

The rear panel 14 of the box-shaped casing 5 also presents a through hole with greater diameter 16 in which the switching and shutdown button (on/off, not visible) accessible to the user of the device 1 of the invention is housed, as well as an auxiliary through hole 17 for housing a quick coupling socket (also not shown) for the connection of a battery charger jack. Preferably but not necessarily, the articulation means 4 comprise extension means, overall indicated with 18, suitable to define for the motorization means 3:
- a non-operative position (shown in figures 2 and 3), coincident with the rest position of the device 1, in which the extension means 18 fall inside the overall dimensions of the support means 2 for removing the motorization means 3 from the rear wheel 54 of the bicycle 50;
- an operative position (shown in figures 1 and 5), coincident with the operating position of the device 1, in which the extension means 18 posteriorly protrude from the support means 2 for positioning the motorization means 3 in contact with the rear wheel 54 of the bicycle 50, ready for achieving the assisted propulsion thereof when operated by the user by pressing the on/off button.

It follows, then, that in the rest position (i.e., when the bicycle 50 is not in use), the device 1 of the invention is extremely compact while integrating in it the motorization means 3 and while remaining coupled with the rear part 52 of the bearing frame 53 of the bicycle 50, all to the advantage of the containment of the spaces occupied and limitation of the risk of dangerous accidental impacts: even this factor contributes to significantly differentiate the device 1 of the invention from the known equivalent devices, visible in the patent documents previously highlighted, which do not involve at all the possibility of reducing their dimensions when they take the rest position.

According to the preferred embodiment described herein of the invention, the extension means 18 newly introduced are coupled with the support means 2 through hinge means, overall indicated with 19 and better visible in figures 5 and 6, and with the motorization means 3 through union means, as a whole indicated with 20.

The device 1 comprises, also, advantageously, first linear end-of-stroke means, as a whole numbered with 21 and suitable to stop the fall movement of the extension means 18 in the passage of the motorization means 3 from the non-operative position to the operative position, and second linear end-of-stroke means, overall numbered with 22 and whose function is clearly visible in figure 7.

These second end-of-stroke means 22 are used to stop the return movement of the extension means 18 in the passage of the motorization means 3 from the operative position to the non-operative position: this ensures that the motorization means 3 take in each operating position the correct desired and designed configuration.

By preferred but not binding way, the electric propulsion device 1 of the bicycle 50 of the invention includes first retaining means, overall indicated with 23, suitable to stably keep the motorization means 3 in the non-operative position, and second retaining means, generally indicated with 24, suited to stably keep the motorization means 3 in the operative position.

In particular, the second retaining means 24 coincide in this case, in a purely preferred but not claimed example, with the second end-of-stroke means 22, while the first retaining means 23 will be analyzed in detail in the following.

Figures 9 and 10 show that the support means 2, namely the box-shaped casing 5 in the case at issue, include guide means, overall indicated with 25, which are provided for cooperating with the extension means 18 during the aforesaid return movement and aforesaid fall movement of the extension means 18 so that the latter are effectively and properly supported during the initial phase of such a fall movement, during the final phase of such a return movement, and when they fall back in the overall dimensions of the support means 2 for positioning the motorization means 3 for a given period in the non-operative position.

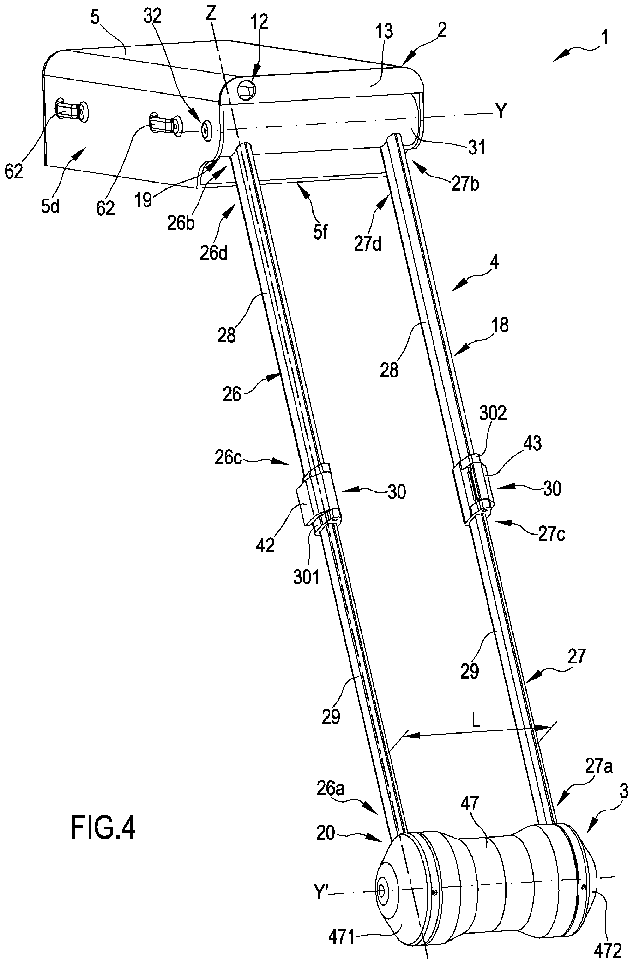

Going into detail of the technical features introduced, in the figures mentioned so far, and in particular in figures 4-7 it is shown that, preferably, the extension means 18 includes a first telescopic mechanical arm 26 and a second telescopic mechanical arm 27 equal each other by profile and length, parallely spaced apart by a prefixed distance L.

The telescopic mechanical arms 26, 27 are provided with a respective lower end 26a, 27a coupled through the union means 20 with the motorization means 3 and with a respective upper end 26b, 27b coupled through the hinge means 19 with the support means 2.

More specifically, it is observed that the telescopic mechanical arms 26, 27 are arranged, in side view, according to a common:
- horizontal direction X when the motorization means 3 assume the aforesaid non-operative position, as it can be derived from figures 2 and 3;
- oblique direction Z, defining with the horizontal direction X an inner obtuse angle, when the motorization means 3 assume the operative position, the inner obtuse angle being directed towards the rear wheel 54 of the bicycle 50, as shown in figure 4.

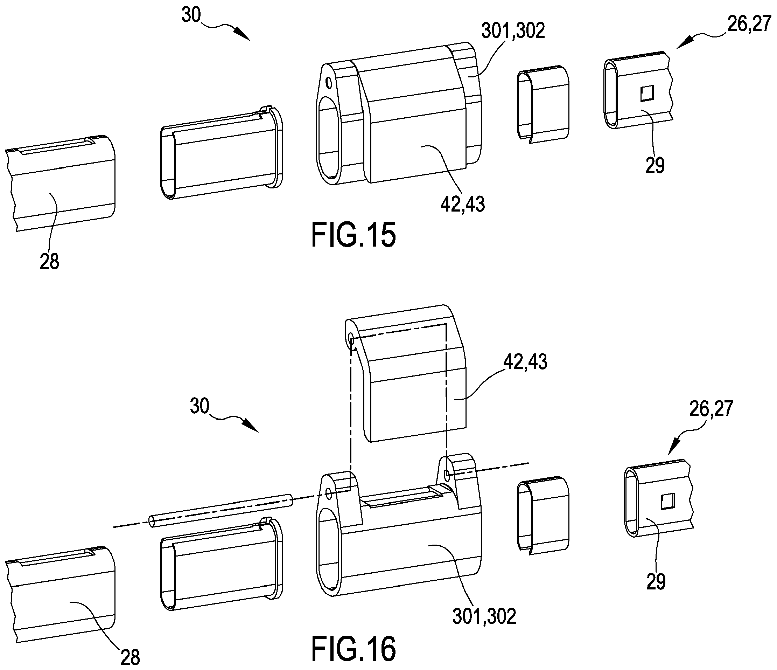

It should be noted that, in a purely indicative but not exclusive way, each of the telescopic mechanical arms 26, 27 comprises in this case two tubular elements 28, 29 telescopically coupled each other through blocking means, overall numbered with 30 and better seen in figures 15 and 16, arranged at the intermediate zone 26c, 27c of these telescopic mechanical arms 26, 27.

As it is visible in figures 2 and 3, in the non-operative position of the motorization means 3, the telescopic mechanical arms 26, 27 are contained, and thus properly protected, into the box-shaped casing 5, while as shown in figure 4, in the operative position of the motorization means 3, the telescopic mechanical arms 26, 27 laterally project from the box-shaped casing 5 escaping from the box-shaped casing 5 itself passing through the respective access openings 6, 7 and making a angle strike downwards which stops when the outer wall 26d, 27d of the mechanical arms 26, 27 interferes with the lower edge 5f of the box-shaped casing 5.

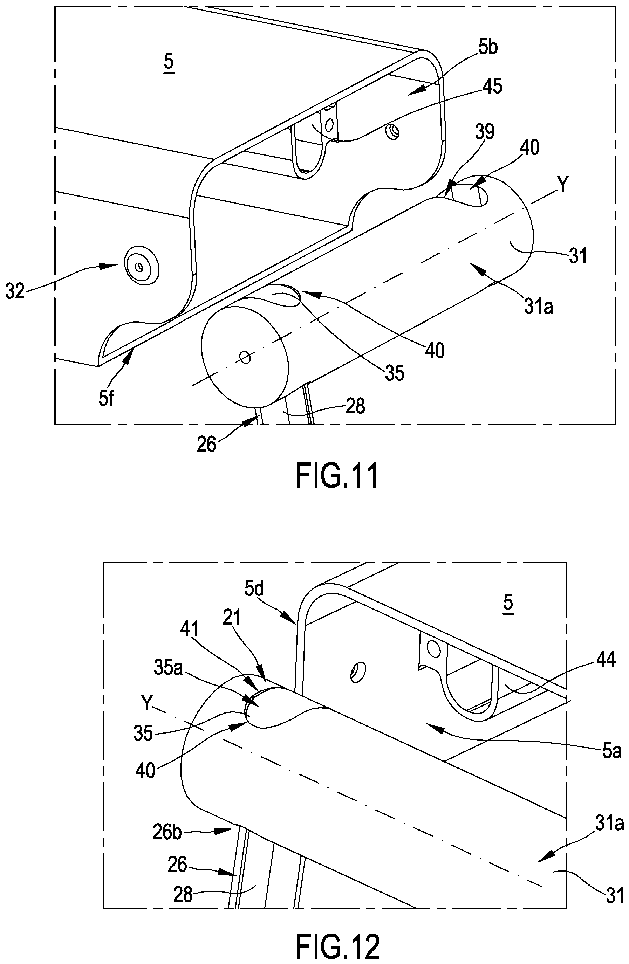

As regards the hinge means 19, they are visible for example in figures 4-6 but with more precision in figures 11 and 12: preferably but not necessarily, they comprise an operative roller 31, provided with ends fixed to the inner side walls 5a, 5b mutually opposite of the box-shaped casing 5 through pivot means, overall indicated with 32.

The operative roller 31 defines a linear axis Y which is parallel to the hub 58 of the rear wheel 54 of the bicycle 50 when the support means 2 are coupled with the rear part 51 of the bearing frame 53 of the bicycle 50 itself, i.e. when the device 1 of the invention is in applicative conditions.

The operative roller 31 rotates about the aforesaid linear axis Y when the motorization means 3 pass from the non-operative position to the operative position and vice versa: in particular, the operative roller 31 rotates clockwise when passing of the motorization means 3 from the non-operative position to the operative position and counter-clockwise when passing of the motorization means 3 from the operative position to the non-operative position.

The pivot means 32 are of the type per se known to the person skilled in the art, being such that to allow the rotation of the operative roller 31 about the linear axis Y.

As far as the first linear end-of-stroke means 21 are concerned, they preferentially comprise:
- a pair of closure caps 33, 34, provided with a shaped head 35 projecting axially from the upper end 26b, 27b of each of the telescopic mechanical arms 26, 27 compared to which presents larger cross section, and with a linear stem 36 integrally engaged in the upper end 26b, 27b of each of the telescopic mechanical arms 26, 27: see in this respect figures 7,13 and 14;
- a pair of surface shoulders 38, 39, each of which surrounds a through hole 40 which slidingly receives one of the telescopic mechanical arms 26, 27 and is formed in the operative roller 31 so as to define a seat surface 41 in which the shaped head 35 of the closure caps 33, 34 is housed.

In function of such a constructive composition of the first linear end-of-stroke means 21, it is thus obtained in a not claimed example that, in the operative position of the motorization means 3, visible in figures 11 and 12:
- the upper end 26a, 27a of the telescopic mechanical arms 26, 27 is positioned inside the operative roller 31, and with it the linear stem 36 engaged in it by precision;
- the shaped head 35 of the closure caps 33, 34 presents an outer wall 35a coplanar to the outer surface 31a of the operative roller 31.

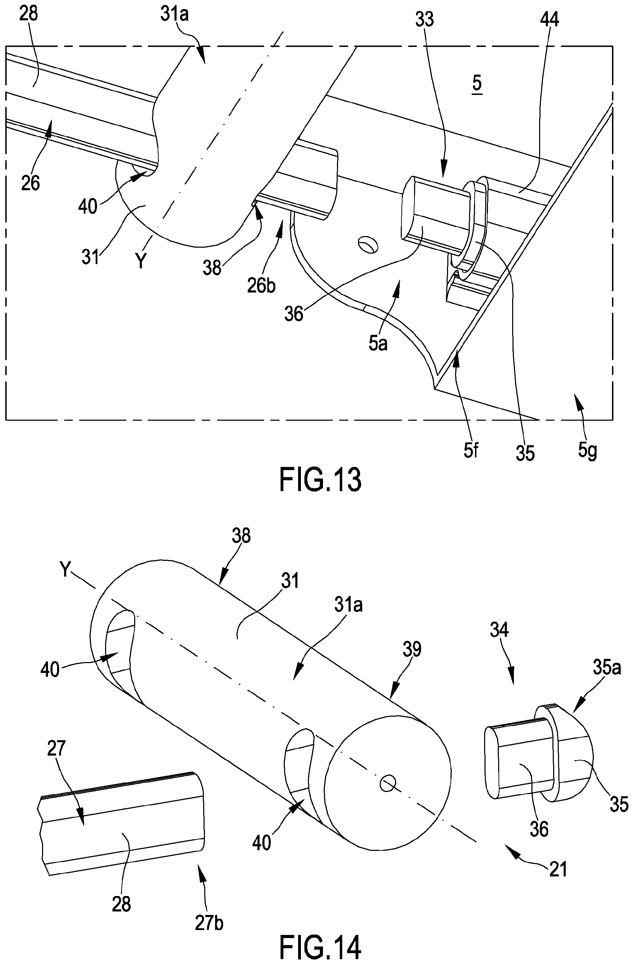

On the other hand, in the non-operative position of the motorization means 3, fully visible in figures 2 and 3 and partially in figure 13, it results that:
- the telescopic mechanical arms 26, 27 protrude almost entirely from the operative roller 31 to be contained into the guide means 25;
- the shaped head 35 of the closure caps 33, 34 is facing with the aforesaid outer wall 35a to the inner bottom wall 5c of the box-shaped casing 5.

As far as the second linear end-of-stroke means 22 are concerned, figures 2, 3, 6 and 7 illustrate that in a preferred but not exclusive manner they comprise:
- a pair of abutment teeth 42, 43, each of which protruding from the outer wall 26d, 27d of one of the telescopic mechanical arms 26, 27 at the intermediate zone 26c, 27c of the latter;
- the outer surface 31a of the operative roller 31 against which the abutment teeth 42, 43 contrast in the non-operative position of the motorization means 3.

More precisely, each of the abutment teeth 42, 43 protrudes outwardly from a connector block 301 of the blocking means 30 arranged at the intermediate zone 26c, 27c of the telescopic mechanical arms 26,27.

In figures 10-13 it is highlighted as the guide means 25 comprise, preferably but not necessarily, a pair of linear tubular elements 44, 45, contained inside the box-shaped casing 5, fixed in a removable way to its inner side walls 5a, 5b and parallel spaced apart each other by a distance equal to the constant prefixed distance L separating the telescopic mechanical arms 26, 27.

In the non-operative position of the motorization means 3, the linear tubular elements 44, 45 are coaxial to the respective through hole 40 (made in the operative roller 31) and the respective through opening 37 (made in the front panel 13) and house almost totally the relative telescopic mechanical arms 26, 27 in a stable and safe way, appropriately avoiding the exposure to the external environment of the telescopic mechanical arms 26, 27 still always consisting of mechanical parts connected each other otherwise potentially subject to wear due to contact with atmospheric agents and/or to accidental impacts.

In essence, therefore, the linear tubular elements 44, 45 are hidden from view and arranged in the horizontal direction X firstly introduced, along which, however, the box-shaped casing 5mainly develops.

It should be also noted that the profile of the through opening 37, the through hole 40 (or at least the surface seat 41), the shaped head 35 belonging to the closure caps 33, 34, each of the linear tubular elements 44, 45 is exactly the same in order to ease the proper sliding of the telescopic mechanical arms 26, 27 within the corresponding linear tubular elements 44, 45.

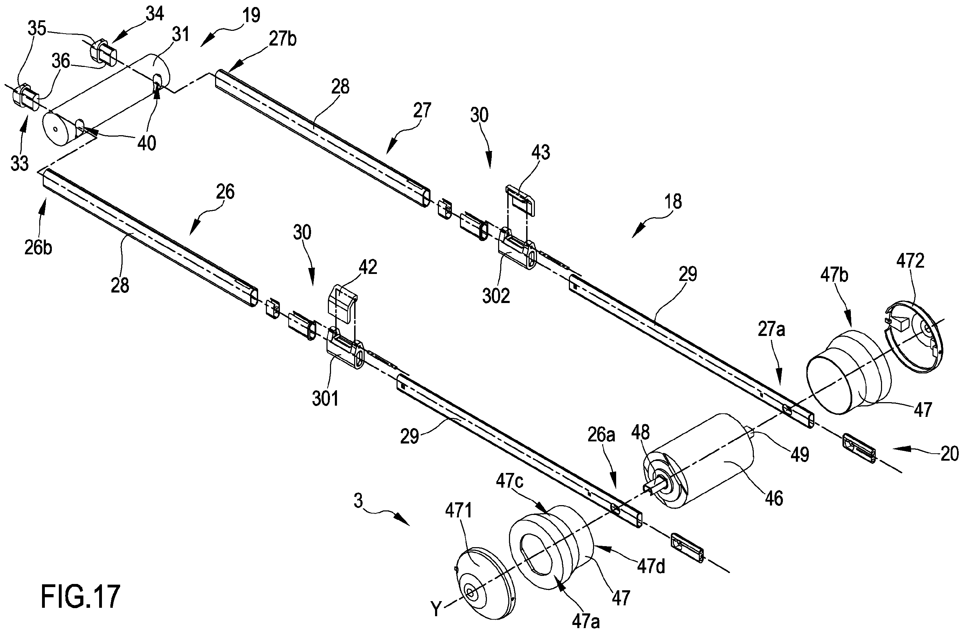

As far as the motorization means 3 are concerned, it is shown in figure 17 that they preferably include an electric motor 46, of the DC type with voltage for example equal to 36 Volts and power equal to 250 Watt, suitable to be placed in rotation around a longitudinal axis Y' in a direction of rotation opposite to the direction of rotation of the rear wheel 54, with which it cooperates by friction, of the bicycle 50 when the latter moves forward on the travelling surface.

The longitudinal axis Y' defined by the electric motor 46 is parallel to the linear axis Y defined by the operative roller 31.

In an advantageous but illustrative way, the electric motor 46 is contained inside a tubular protection body 47 from the opposite side edges 47a, 47b of which the pins 48, 49 of the motion transmission shaft (not visible) protrude and whose outer surface 48c, cooperating with the rear wheel 54 (as in this case, by way of example, it is repeated) of the bicycle 50 when the motorization means 3 assume the operative position, is tapered from the side edges 47a, 47b towards the central zone 47d in order to mantain the rear wheel 54 firmly in contact with the electric motor 46, preventing reciprocal accidental separation.

Advantageously but not necessarily, the tubular protection body 47 is laterally closed by two finishing cups 471, 472 opposite each other that hide from view the union means 20, isolating and protecting the electric motor 46 and improving the overall aesthetic effect of the constructive assembly.

As already mentioned, object of the present invention is also a bicycle (or two-wheel velocipede) visible only in figure 1 where it is generally indicated with 50 and adapted to be used in two modes, as it will be explained shortly.

It is observed that the bicycle 50 is essentially and substantially as the pedal-assisted type including:
- a bearing frame 53 comprising a rear part 51 and a front part 52;
- a rear wheel 54 and a front wheel 55 fixed to the bearing frame 53, suitable to stand on the travelling surface;
- the device for the electric propulsion 1 as described above, coupled with the bearing frame 53 and which in particular includes:
   - the support, means 2 coupled with the rear part 51 of the bearing frame 53, in a position above the rear wheel 54;
   - the motorization means 3 of the electric motor 46 type connected with the support means 2 suitable to cooperate with the rear wheet 54 for imparting, when operated, a rotary motion to the rear wheel 54 due to friction between the motorization means 3 and the rear wheel 54;
   - the articulation means 4 by means of which the motorization means 3 are connected with the support means 2.

In accordance with the invention, the articulation means 4 are dimensioned in such a way as to place the motorization means 3, in the position in which they cooperate with the rear wheel 54:
- totally below the horizontal diameter, parallel to the travelling surface, defined by the rear wheel 54 when the latter is seen laterally or frontally;
- at a position in which the articulation means 4 define a plane which forms an angle not lower than substantially 90° with the plane defined by the support means 2 on the rear part 51 of the bicycle 50.

Preferably but not necessarily, the device for the electric propulsion 1 of the bicycle 50, object of a not claimed example, is removably coupled with the bearing frame 53 through connecting means, overall indicated with 59 in figure 1: in this way, the device 1 is not advantageously permanently bound to the bicycle 50, as it happens in similar devices of known type, thus allowing even to a non particularly skilled user in every moment to bring the bicycle 50 itself back in the human propulsion configuration totally removing the device 1 with simple and rapid manual operations.

In such an embodiment, the example allows, therefore, a dual use of the same bicycle 50, depending on the needs: pedal-assisted or exclusively human propulsion.

Ceased the temporary use on the bicycle 50, thanks to its removability feature, the example device 1 is easily removed from the bicycle 50 itself, folded and compacted, thus minimizing overall dimensions and making its transportation and custody very easy and safe.

According to the not claimed example described herein of the bicycle 50, the connecting means 59 comprise two elastic bands, not shown for the sake of simplicity, loop-closed by means of quick coupling (for example of the Velcro® type) around the box-shaped casing 5 belonging to the support means 2 and to the rear rack 56 fixed to the bearing frame 53.

In particular, each of the elastic bands is arranged passing through two slots 60, 61 defined by as many two constraint plates 62, 63 applied to respective outer side walls 5d, 5e of the box-shaped casing 5.

It is understood that in other examples, not represented, the connecting means could comprise a number of elastic bands different from that one described above, this number being able to vary depending on the design choices starting from one; it is clear that also the number of slots and constraint plates defined on the outer side walls of the box-shaped casing will vary according to the variation of the elastic bands provided.

Furthermore, other examples, not shown in the attached drawings, could provide that each of the elastic bands is inserted into only one slot defined by a single constraint plate fixed to only one of outer side walk of the box-shaped casing.

In a proper but not limiting manner, the bicycle 50 also includes a safety tie-beam 64 removably coupled by means of end hooks 67, 68 to the hub 58 of the rear wheel 54 and enveloping the articulation means 4 in order to put in traction the motorization means 3 and thus further ensure the constant maintenance of the position in which they effectively cooperate with the rear wheel 54.

The safety tie-beam 64 is also used as an element of the first retaining means 23 with which the motorization means 3 are stably kept in the non-operative position: in such a situation, indeed, such a safety tie-beam 64 is released from the hub 58 of the bearing frame 53 of the bicycle 50 and suitably wrapped around the box-shaped casing 5 of the support means 2 in which is stably kept hooking each other its end hooks 67, 68.

It is understood that in other embodiments, not shown in the attached drawings, in order to get the advantageous technical effect described in the previous paragraph, the safety tie-beam could be placed or coupled around the motorization means, always hooked, by the end hooks mentioned above, at the opposite ends of the hub of the rear wheel.

In addition, further examples, again not shown, could provide that the device for the electric propulsion of a bicycle comprises a pair of safety tie-beams, each of which coupled at one end with the articulation means or with the motorization means and at the opposite end with the hub of the rear wheel of the bicycle.

Operatively, the device for the electric propulsion 1 can be installed on the bicycle 50 even by a non necessarily expert user, for example skilled in the do-it-yourself, who buys or takes from the place where it is kept in his own house the device 1, placed in the rest position with minimum overall dimensions of figure 2 and 3, and places it in this case in the rear part 51 of the bearing frame 53, in such a way that the outer lower wall 5g of the box-shaped casing 5 is close to the rear rack 56 standing above the rear wheel 54.

Thereafter, the user ensures to the rear rack 56 the device for the electric propulsion 1 by wrapping the elastic straps around the box-shaped casing 5 and the rear rack 56 of the bicycle 50, passing them through the slots 60, 61 present in the outer side walls 5d, 5e of the box-shaped casing 5 itself.

Then, the user extracts the telescopic mechanical arms 26, 27 of the extension means 18 from the linear tubular elements 44, 45 of the guide means 25 to the point at which the first linear end-of-stroke means 21 exert their action and, thanks to the clockwise rotation of the operative roller 31 of the hinge means 19 about the linear axis Y, determines the downward rotation of these telescopic mechanical arms 26, 27 up to the stop point, determined by the contact of the outer wall 26d, 27d of the mechanical arms 26, 27 with the bottom edge 5f of the box-shaped casing 5.

At that point, the user pulls the tubular element 29 from the tubular element 28 extending to the maximum the telescopic mechanical arms 26, 27 in such a way that the motorization means 3 assume the operative position of figure 4, in which they exceed half of the rear wheel 54, defining the oblique direction Z, and they position over the lower edge 65a of the rear rack 65 and at an angular position spaced apart by an angle not lower than substantially 90° with respect to the position of the support means 2 on the rear part 51 of the bicycle 50.

The user then positions the safety tie-beam 64 by placing it around the telescopic mechanical arms 26, 27 and hooking its end hooks 67, 68 at the opposite ends of the hub 58 of the rear wheel 54, in such a way as to put in traction these telescopic mechanical arms 26, 27 and keep the motorization means 3, in particular the tubular protection body 47 which encloses the electric motor 46, stably close to the rear wheel 54.

Finally, the user performs the due electrical connections of the electric motor 46, accelerator, front and rear brakes of the pedals to the control unit 9 present inside of the box-shaped casing 5 of the support means 2.

The device for electric propulsion 1 assumes, therefore, the full and effective operating position, illustrated in figure 1, without the need for any modification to the rear rack (or fender) 65 that surrounds the rear wheel 54 of the bicycle 50, contrary to what necessarily prescribed by the equivalent devices of the known art.

The user brings the device for the electric propulsion 1 back in the rest position, shown in figures 2 and 3, by performing exactly in the reverse order the sequence of operations just described.

If desired, the device for the electric propulsion 1 remains coupled with the rear part 51 of the bearing frame 53 of the bicycle 50, on the rear rack 56 standing above the rear wheel 54, assuming the rest position in which the motorization means 3 are moved away from the rear wheel 54 itself.

If, instead, the user wants to restore the original configuration of the bicycle 50, returning it to the traditional human-powered version, the user, thanks to the removability feature described before, with simple and quick manoeuvres releases the connecting means 59 from the box-shaped casing 5 and the rear rack 56: in doing so, the device 1 is totally free and is suitably separated from the bicycle 50 to be stored even in a small compartment of a shelf available to the user, for example in the garage of his house; its overall dimensions in the rest position and in non-applicative conditions is, indeed, minimum or very low, while still integrating in itself the motorization means 3.

Based on the description just given, it is understood, therefore, that the device for the electric propulsion of a bicycle, and the bicycle comprising such a device for the electric propulsion, both object of the invention, achieve the purposes and reaches the advantages already mentioned above.

The device for the electric propulsion of a bicycle of the present invention has simple construction, more compact and pleasant to the sight, especially when it takes the rest condition, compared to the equivalent devices of the known art, visible for example in the patent publications cited above, and this also and especially at the light of the fact that, unlike similar known devices, incorporates the motorization means of electric motor type.

Furthermore, the device for the electric propulsion of the invention protrudes laterally from the rear wheel of a bicycle at a more limited extent with respect to the equivalent devices of the prior art (for example those ones already listed above in the description), to the point to fall almost fully in the orthogonal projection of the wheel itself on the plane defined by the travelling surface, when it takes the operating conditions- that is installed on the bicycle-.

Such a situation implies obvious advantages for the device of the invention which, indeed, in installation conditions, presents reduced dimensions and is subject to risks of damaging accidental impacts lower than known similar device.

At execution stage, changes could be made to the device for the electric propulsion of a bicycle of the present invention consisting, for example, in support means different from those ones previously described.

In addition, in other embodiments of the device for the electric propulsion of a bicycle claimed herewith as exclusive right, still not accompanied by reference drawings, the articulation means connecting the support means with the motorization means could present constructive conception different from that one highlighted in the previous description, which does not affect the advantage brought by the present invention.

The bicycle of the invention could, furthermore, be constituted by a bicycle of a type different from that one mentioned in the description and shown in the figures used in connection with the preferred applicative embodiment of the invention, or more generally by a human-powered bicycle comprising at least one front wheel and at least one rear wheel.

Where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Device (1) for the electric propulsion of a bicycle (50) comprising:
- support means (2) suitable to be coupled with the rear part (51) of the bearing frame (53) of a bicycle (50), in a position above the rear wheel (54) of said bicycle (50) which stands on a travelling surface;
- motorization means (3) of the electric motor (46) type, connected with said support means (2) and suitable to cooperate with said rear wheel (54) of said bicycle (50) for imparting, when operated, a rotary motion to said rear wheel (54) due to friction between said motorization means (3) and said rear wheel (54);
- articulation means (4) which said motorization means (3) are connected through to said support means (2),
wherein said articulation means (4) are dimensioned in such a way as to place said motorization means (3), in the position in which they cooperate with said rear wheel (54) of said bicycle (50):
• totally below the horizontal diameter, parallel to said travelling surface, defined by said rear wheel (54) when said rear wheel (54) is seen laterally or frontally;
• at a position in which said articulation means (4) define a plane which forms an angle not lower than substantially 90° with the plane defined by said support means (2) on said rear part (51) of said bicycle (50),
**characterised in that** said device (1) for the electric propulsion of a bicycle (50), when it takes the operating conditions, installed on said bicycle (50), protrudes rearwards from said rear wheel of said bicycle (50) to the point to fall almost fully in the orthogonal projection of said rear wheel (54) on the plane defined by said travelling surface for what concerns the dimension in the longitudinal direction of the bicycle.

2. Device (1) according to claim 1, **characterized in that** said support means (2) comprise a box-shaped casing (5) suitable to be arranged close to a rear rack (56) of said bicycle (50) and having at least one housing seat (6, 7).

3. Device (1) according to claim 2,
**characterized in that** said articulation means (4) comprise extension means (18) suitable to define for said motorization means (3) a non-operative position, coincident with the rest position of said device (1), in which said extension means (18) fall inside the overall dimensions of said support means (2) for removing said motorization means (3) from said rear wheel (54) of said bicycle (50), and an operative position, coincident with the operating position of said device (1), in which said extension means (18) posteriorly protrude from said support means (2) for positioning said motorization means (3) in contact with said rear wheel (54) of said bicycle (50), ready for achieving the assisted propulsion thereof when operated.

4. Device (1) according to claim 3,
**characterized in that** said extension means (18) are coupled with said support means (2) through hinge means (19) and with said motorization means (3) through union means (20).

5. Device (1) according to claim 4, **characterized in that** it comprises first linear end-of-stroke means (21) suitable to stop the fall movement of said extension means (18) when passing from said non-operative position to said operative position of said motorization means (3), and second linear end-of-stroke means (22) suitable to stop the return movement of said extension means (18) when passing from said operative position to said non-operative position of said motorization means (3).

6. Device (1) according to any of the claims 3 to 5,
**characterized in that** it comprises first retaining means (23), suitable to stably keep said motorization means (3) in said non-operative position, and second retaining means (24) suitable to stably keep said motorization means (3) in said operative position.

7. Device (1) according to any of the claims 3 to 6, **characterized in that** said support means (2) comprise guide means (25) suitable to cooperate with said extension means (18) during said return movement and said fall movement of said extension means (18) in such a way that said extension means (18) are effectively and properly supported during the initial phase of said fall movement, during the final phase of said return movement and when they fall back in the overall dimensions of said support means (2) for positioning said motorization means (3) for a given period in the non-operative position.

8. Device (1) according to any of the claims 3 to 7, **characterized in that** said extension means (18) include a first telescopic mechanical arm (26) and a second telescopic mechanical arm (27) equal each other parallely spaced apart each other by a prefixed distance (L), provided with a lower end (26a, 27a) coupled through said union means (20) with said motorization means (3) and with an upper end (26b, 27b) coupled through said hinge means (19) with said support means (2).

9. Device (1) according to claim 8, **characterized in that** said telescopic mechanical arms (26, 27) are arranged according to a common:
- horizontal direction (X) when said motorization means (3) assume said non-operative position;
- oblique direction (Z) defining with said horizontal direction (X) an inner obtuse angle when said motorization means (3) assume said operative position, said inner obtuse angle being directed toward said rear wheel (54) of said bicycle (50).

10. Device (1) according to claim 8 when dependent on claim 5, **characterized in that** said hinge means (19) comprise an operative roller (31), provided with ends fixed through pivot means (32) to the inner side walls (5a, 5b) mutually opposite of said box-shaped casing (5) and defining a linear axis (Y) suitable to be parallel to the hub (58) of said rear wheel (54) of said bicycle (50) when said support means (2) are coupled with said rear part (51) of said bearing frame (53), said operative roller (31) rotating about said linear axis (Y) when said motorization means (3) pass from said non-operative position to said operative position and vice versa.

11. Device (1) according to claim 10, **characterized in that** said first linear end-of-stroke means (21) comprise:
- a pair of closure caps (33, 34), each of which provided with a shaped head (35), projecting axially from said upper end (26b, 27b) of one of said telescopic mechanical arms (26, 27) compared to which presents larger cross section, and with a linear stem (36) engaged in said upper end (19b, 20b) of one of said telescopic mechanical arms (26, 27);
- a pair of surface shoulders (38, 39), each of which surrounds a through hole (40) which slidingly receives one of said telescopic mechanical arms (26, 27) and is formed in said operative roller (31) so as to define a surface seat (41) in which said shaped head (35) of said closure caps (33, 34) is housed.

12. Device (1) according to claim 10, **characterized in that** said second linear end-of-stroke means (22) comprise:
- a pair of abutment teeth (42, 43), each of which protrudes from the outer wall (26d, 27d) of one of said telescopic mechanical arms (26, 27) at the intermediate zone (26c , 27c) of said telescopic mechanical arms (26, 27);
- the outer surface (31a) of said operative roller (31) against which said abutment teeth (42, 43) contrast in said non-operative position of said motorization means (3).

13. Device (1) according to claim 8 when dependent on claim 7, **characterized in that** said guide means (25) comprise a pair of linear tubular elements (44, 45), contained inside said box-shaped casing (5), fixed to said inner side walls (5a, 5b) of said box-shaped casing (5) and parallely spaced apart each other by a distance equal to said prefixed distance (L) which separates said telescopic mechanical arms (26, 27) which, in said non-operative position, are contained inside said tubular linear elements (44,45).

14. Device (1) according to any of the preceding claims, **characterized in that** said electric motor (46) of said motorization means (3) is suitable to be placed in rotation around a longitudinal axis (Y') in a direction of rotation opposite to the direction of rotation of said rear wheel (54) of said bicycle (50).

15. Device (1) according to claim 14, **characterized in that** said electric motor (46) is contained inside a tubular protection body (47) from the opposite side edges (47a, 47b) of which the pins (48, 49) of the motion transmission shaft protrude and whose outer surface (47c), cooperating with said rear wheel (54) of said bicycle (50) when said motorization means (3) assume said operative position, is tapered from said side edges (47a, 47b) towards the central zone (47d) in order to keep said rear wheel (54) of said bicycle (50) firmly in contact with said electric motor (46).

16. Bicycle (50) comprising:
- a bearing frame (53) comprising a rear part (51) and a front part (52);
- at least one rear wheel (54) and at least one front wheel (55) fixed to said bearing frame (53) and suitable to stand on a travelling surface;
- a device (1) for the electric propulsion according to claim 1, coupled with said bearing frame (53).

## Patentansprüche

1. Vorrichtung (1) zum elektrischen Antrieb eines Fahrrads (50), umfassend
- Stützmittel (2), die geeignet sind, mit dem hinteren Teil (51) des Stützrahmens (53) eines Fahrrads (50) gekoppelt zu werden, in einer Position über dem Hinterrad (54) des Fahrrads (50), das auf einer Verlagerungsfläche anliegt;
- Motorisierungsmittel (3) des Elektromotortyps (46), die mit den genannten Stützmitteln (2) verbunden sind und zum Zusammenwirken mit dem Hinterrad (54) des Fahrrads (50) geeignet sind, um sobald aktiviert, eine Drehbewegung diesem Hinterrad (54) durch Reibung zwischen den Motorisierungsmitteln (3) und dem genannten Hinterrad (54), zu vermitteln;
- Gelenkmittel (4), mit denen die genannten Motorisierungsmittel (3) durch die genannten Stützmittel (2) verbunden sind,
wobei die genannten Gelenkmittel (4) solche Abmessungen besitzen, dass sie die genannten Motorisierungsmittel (3) in der Lage platzieren, in der sie mit dem genannten Hinterrad (54) des Fahrrads (50) zusammenwirken;
* vollständig unterhalb des horizontalen Durchmessers und parallel zu der genannten Verlagerungsfläche, die durch das genannte Hinterrad (54) definiert wird, wenn das genannte Hinterrad (54) von der Seite oder von vorne betrachtet wird;
* in einer Lage, in der die genannten Gelenkmittel (4) eine Ebene definieren, die praktisch einen Winkel von nicht weniger als 90° mit der Ebene bilden, die durch die genannten Stützmittel (2) auf dem genannten hinteren Teil (51) des genannten Fahrrads (50), definiert wird,
**dadurch gekennzeichnet, dass** die genannte Vorrichtung (1) für den elektrischen Antrieb eines Fahrrads (50), wenn sie die Betriebsbedingungen annimmt und an dem genannten Fahrrad (50) installiert ist, von dem genannten Hinterrad des genannten Fahrrades (50) derart nach hinten vorsteht, bis es in Bezug auf die Abmessungen in der Längsrichtung des Fahrrads, fast vollständig in den orthogonalen Vorsprung des genannten Hinterrads (54), in der durch genannte Verlagerungsfläche definierten Ebene, fällt.

2. Vorrichtung (1) nach Anspruch 1,
**dadurch gekennzeichnet, dass** die genannten Stützmittel (2) ein kastenförmiges Gehäuse (5) umfassen, das nahe an einem hinteren Gepäckträger (56) des genannten Fahrrads (50) angeordnet und mindestens einen Sitz (6, 7) des Gehäuses aufweist.

3. Vorrichtung (1) nach Anspruch 2,
**dadurch gekennzeichnet, dass** die genannten Gelenkmittel (4) Verlängerungsmittel (18) umfassen, die dazu geeignet sind, für die genannten Motorisierungsmittel (3) eine nicht operative Stellung zu definieren, die mit der Ruhestellung der genannten Vorrichtung (1) zusammenfällt, in der die genannten Verlängerungsmittel (18) in die Gesamtabmessungen der genannten Stützmittel (2) fallen, um die genannten Motorisierungsmittel (3) von dem genannten Hinterrad (54) des Fahrrads (50) zu entfernen, und in einer operativen Stellung, die mit der operativen Stellung der genannten Vorrichtung (1) übereinstimmt, in der die genannten Verlängerungsmittel (18) von der Stützeinrichtung (2) nach hinten vorstehen, um die genannten Motorisierungsmittel (3) in Kontakt mit dem genannten Hinterrad (54) des genannten Fahrrads (50) zu bringen, das bereit ist, seinen unterstützten Antrieb zu erreichen, sobald es aktiviert ist.

4. Vorrichtung (1) nach Anspruch 3, **dadurch gekennzeichnet, dass** die genannten Verlängerungsmittel (18) mit den genannten Stützmitteln (2) durch Scharniermittel (19) und mit den genannten Motorisierungsmitteln (3) durch Verbindungsmittel (20) verbunden sind.

5. Vorrichtung (1) nach Anspruch 4,
**dadurch gekennzeichnet, dass** sie erste lineare Begrenzungsmittel (21) umfasst, die zum Stoppen der Fallbewegung der genannten Verlängerungsmittel (18) geeignet sind, die von der genannten Nichtbetriebsposition in die genannte Betriebsposition der genannten Motorisierungsmittel (3) übergehen. und zweite lineare Begrenzungsmittel (22), die dazu ausgelegt sind, die Rückbewegung der genannten Verlängerungsmittel (18) zu stoppen, die von der genannten Betriebsposition in die genannte Nichtbetriebsposition der genannten Motorisierungsmittel (3), übergehen.

6. Vorrichtung (1) nach einem der Ansprüche 3 bis 5, **dadurch gekennzeichnet, dass** sie erste Haltemittel (23), die geeignet sind, die genannten Motorisierungsmittel (3) in der genannten Nichtbetriebsposition stabil zu halten, und zweite Haltemittel (24) umfasst, die geeignet sind, die genannten Motorisierungsmittel (3) in der genannten Betriebsposition stabil zu halten.

7. Vorrichtung (1) nach einem der Ansprüche 3 bis 6, **dadurch gekennzeichnet, dass** die genannten Stützmittel (2) Führungsmittel (25) umfassen, die geeignet sind, mit den genannten Verlängerungsmitteln (18) während der genannten Rückbewegung und der genannten Fallbewegung der genannten Verlängerungsmittel (18) derart zusammenzuwirken, dass die genannten Verlängerungsmittel (18) während der Anfangsphase der genannten Fallbewegung, während der Endphase der genannten Rückbewegung effektiv und korrekt unterstützt werden, wenn sie wiederum die totale Abmessungen der genannten Stützmittel (2) zum Positionieren der genannten Motorisierungsmitte (3) für einen bestimmten Zeitraum in der Nichtbetriebsposition.

8. Vorrichtung (1) nach einem der Ansprüche 3 bis 7 , **dadurch gekennzeichnet, dass** die genannten Verlängerungsmittel (18) einen ersten mechanischen Teleskoparm (26) und einen zweiten mechanischen Teleskoparm (27) umfassen, die zueinander gleich und parallel mit Abstand voneinander gemäß einem vorbestimmten Abstand L angeordnet sind, der mit einem unteren Ende (26a, 27a) versehen ist und durch die genannten Verbindungsmittel (20) mit den genannten Motorisierungsmittel (3) und mit einem oberen Ende (26b, 27b), durch die genannten Scharniermittel (19) mit der genannten Stützmittel (2), gekoppelt sind.

9. Vorrichtung (1) nach Anspruch 8,
**dadurch gekennzeichnet, dass** die genannten teleskopischen mechanischen Arme (26, 27):
- nach einer gemeinsamen horizontalen Richtung (X) angeordnet sind, wenn die genannten Motorisierungsmittel (3) die genannten Nichtbetriebsposition einnehmen;
- nach einer gemeinsamen schrägen Richtung (Z) angeordnet sind, die mit der genannten horizontalen Richtung (X) einen inneren stumpfen Winkel definiert, wenn die genannten Motorisierungsmittel (3) die genannte Betriebsposition einnehmen, wobei der genannte innere stumpfe Winkel in Richtung des Hinterrads (54) des genannten Fahrrads (50), orientiert ist.

10. Vorrichtung (1) nach Anspruch 8, wenn von Anspruch 5 abhängig, **dadurch gekennzeichnet, dass** die genannten Scharniermittel (19) eine Betätigungsrolle (31) umfassen, die mit Enden versehen ist, die mittels Drehmitteln (32) an den inneren Seitenwänden (5a, 5b) befestigt sind, dem genannten kastenförmigen Gehäuse (5) gegenüberliegen und eine lineare Achse (Y) definieren, die dazu geeignet ist, parallel zu der Nabe (58) des genannten Hinterrads (54) des genannten Fahrrads (50) zu sein, wenn die genannten Stützmittel (2) mit dem genannten hinteren Teil (51) des genannten Stützrahmens (53) gekoppelt sind, wobei sich die genannte Betätigungsrolle (31) um die genannte Linearachse (Y) dreht, wenn die genannten Motorisierungsmittel (3) von der genannten Nichtbetriebsposition zu der genannten Betriebsposition übergehen, und umgekehrt.

11. Vorrichtung (1) nach Anspruch 10,
**dadurch gekennzeichnet, dass** die genannten ersten linearen Begrenzungsmittel (21):
- ein Paar Verschluss-Stopfen (33, 34) umfassen, von denen jeder mit einem profilierten Kopf (35) versehen ist, der im Vergleich zu dem genannten oberen Ende (26b, 27b) eines der genannten mechanischen Teleskoparme (26, 27) axial vorsteht mit einem vergleichbar größeren Querschnitt, und einen linearen Schaft (36) aufweist, der in das genannte obere Ende (19b, 20b) eines der genannten mechanischen Teleskoparme (26, 27) gekoppelt ist;
- ein Paar von Oberflächenschultern (38, 39) umfassen, von denen jede ein Durchgangsloch (40) umgibt, das einen der genannten mechanischen Teleskoparme (26, 27) verschiebbar aufnimmt und in der genannten Betriebsrolle (31) ausgebildet ist, um so einen Flächensitz (41) zu definieren, in dem der genannte profilierte Kopf (35) der genannten Verschluss-Stopfen (33, 34) untergebracht ist.

12. Vorrichtung (1) nach Anspruch 10,
**dadurch gekennzeichnet, dass** die genannten zweiten linearen Begrenzungsmittel (22):
- ein Paar Kontaktzähne (42, 43) umfassen, von denen jeder von der Außenwand (26d, 27d) eines der genannten Teleskoparme (26, 27) in der Zwischenzone (26c, 27c) der genannten Teleskoparme (26, 27), vorsteht;
- die Außenfläche (31a) der genannten Betriebsrolle (31) umfassen, gegen die sich die genannten Kontaktzähne (42, 43) in der genannten Nichtbetriebsposition des genannten Motorisierungsmittel (3) abheben.

13. Vorrichtung (1) nach Anspruch 8, wenn von Anspruch 7 abhängig, **dadurch gekennzeichnet, dass** die genannten Führungsmittel (25) ein Paar von linearen rohrförmigen Elementen (44, 45) umfassen, die im Inneren des genannten kastenförmigen Gehäuses (25) enthalten sind, das an den genannten inneren Seitenwänden (5a, 5b) des genannten kastenförmigen Gehäuses (5) befestigt sind und parallel zueinander mit einem Abstand gleich dem vorbestimmten Abstand (L), der die genannten teleskopischen mechanischen Arme (26, 27) trennt, die in der genannten Nichtbetriebsposition in den genannten linearen rohrförmigen Elementen (44, 45) enthalten sind.

14. Vorrichtung (1) nach einem der vorhergehenden Ansprüche, **dadurch gekennzeichnet, dass** der genannte Elektromotor (46) der genannten Motorisierungsmittel (3) dazu geeignet ist, um eine Längsachse (Y¹) in einer Drehrichtung entgegengesetzt zur Drehrichtung des genannten Hinterrads (54) des genannten Fahrrads (50), in Drehung gesetzt zu werden.

15. Vorrichtung (1) nach Anspruch 14, **dadurch gekennzeichnet, dass** der genannte Elektromotor (46) in einem rohrförmigen Schutzkörper (47) enthalten ist, von dessen gegenüberliegenden Seitenkanten (47a, 47b) die Stifte (48, 49) der Bewegungsübertragungswelle vorstehen, und dessen Außenfläche (47c), die mit dem genannten Hinterrad (54) des genannten Fahrrads (50) zusammenwirkt, wenn die genannten Motorisierungsmittel (3) die genannte Betriebsposition einnehmen, durch die genannten Seitenkanten (47a, 47b) in Richtung der Mittelzone (47d) abgeschrägt ist, um das genannte Hinterrad (54) des genannten Fahrrads (50) fest in Kontakt mit dem genannten Elektromotor (46) zu halten.

16. Fahrrad (50) mit:
- einem Stützrahmen (53) mit einem hinteren Teil (51) und einem vorderen Teil (52);
- mindestens einem Hinterrad (54) und mindestens einem Vorderrad (55), die an dem genannten Stützrahmen (53) befestigt sind und auf einer Verlagerungsfläche aufliegen können;
- eine Vorrichtung (1) für den elektrischen Antrieb nach Anspruch 1, die mit dem genannten Stützrahmen (53) gekoppelt ist.

## Revendications

1. Dispositif (1) pour la propulsion électrique d'une bicyclette (50) comprenant :
- des moyens de support (2) aptes à être couplés à la partie arrière (51) du châssis de support (53) d'une bicyclette (50), dans une position située au-dessus de la roue arrière (54) de ladite bicyclette (50) qui est en appui sur une face de déplacement;
- des moyens de motorisation (3) du type à moteur électrique (46) reliés auxdits moyens de support (2) et aptes à coopérer avec ladite roue arrière (54) de ladite bicyclette (50) pour conférer, une fois activés, un mouvement de rotation sur ladite roue arrière (54) par frottement entre ledit moyen de motorisation (3) et ladite roue arrière (54);
- des moyens d'articulation (4), avec lesquels lesdits moyens de motorisation (3) sont reliés auxdits moyens de support (2),
dans lequel lesdits moyens d'articulation (4) ont des dimensions telles, pour lesquelles lesdits moyens de motorisation (3) sont placés dans la position avec laquelle il coopèrent avec ladite roue arrière (54) de ladite bicyclette (50);
* complètement en dessous du diamètre horizontal, parallèlement à ladite face de déplacement, étant définis par ladite roue arrière (54), lorsque ladite roue arrière (54) est vue de côté ou de l'avant;
* dans une position dans laquelle lesdits moyens d'articulation (4) définissent un plan qui forme un angle pratiquement non inférieur à 90° avec le plan défini par lesdits moyens de support (2) sur ladite partie arrière (51) de ladite bicyclette (50),
**caractérisé en ce**
**que** ledit dispositif (1) de propulsion électrique d'une bicyclette (50), lorsqu'il assume les conditions de fonctionnement et est installé sur ladite bicyclette (50), fait saillie en arrière de ladite roue arrière de ladite bicyclette (50), jusqu'à ce qu'il tombe presque complètement dans la saillie orthogonale de ladite roue arrière (54) dans le plan défini par ladite face de déplacement, par rapport aux dimensions dans la direction longitudinale de la bicyclette.

2. Dispositif (1) selon la revendication 1, **caractérisé en ce que** lesdits moyens de support (2) comprennent un boîtier (5) en forme de boîte, adapté pour être agencé à proximité d'un porte-bagages arrière (56) de ladite bicyclette (50) et pourvu d'au moins un siège de logement (6, 7).

3. Dispositif (1) selon la revendication 2, **caractérisé en ce que** lesdits moyens d'articulation (4) comprennent des moyens d'extension (18) aptes à définir pour lesdits moyens de motorisation (3) une position non opérationnelle coïncidant avec la position de repos dudit dispositif (1), dans laquelle des moyens d'extension (18) tombent dans les dimensions globales desdits moyens de support (2), pour retirer lesdits moyens de motorisation (3) de ladite roue arrière (54) de ladite bicyclette (50), et dans une position fonctionnelle coïncidant avec une position de fonctionnement dudit dispositif (1), dans laquelle lesdits moyens d'extension (18) font saillie en arrière desdits moyens de support (2) pour positionner lesdits moyens de motorisation (3) en contact avec ladite roue arrière (54) de ladite bicyclette (50), prêt à atteindre leur propulsion assistée une fois activés.

4. Dispositif (1) selon la revendication 3, **caractérisé en ce que** lesdits moyens d'extension (18) sont couplés auxdits moyens de support (2) par des moyens à charnière (19) et auxdits moyens de motorisation (3) par des moyens de jonction (20).

5. Dispositif (1) selon la revendication 4, **caractérisé en ce qu'**il comprend des premiers moyens de limite linéaires (21), aptes à arrêter le mouvement de chute desdits moyens d'extension (18), en passant de ladite position non opérationnelle à ladite position opérationnelle desdits moyens de motorisation (3), et des deuxièmes moyens de limite linéaires (22), aptes à arrêter le mouvement de retour desdits moyens d'extension (18), en passant de ladite position opérationnelle à ladite position non opérationnelle desdits moyens de motorisation (3).

6. Dispositif (1) selon l'une des revendications 3 à 5, **caractérisé en ce qu'**il comprend des premiers moyens de maintien (23) aptes à maintenir lesdits moyens de motorisation (3) de manière stable dans ladite position non opérationnelle, et des deuxièmes moyens de maintien (24) aptes à maintenir lesdits moyens de motorisation (3) de manière stable dans ladite position opérationnelle.

7. Dispositif (1) selon l'une des revendications 3 à 6 , **caractérisé en ce que** lesdits moyens de support (2) comprennent des moyens de guidage (25) aptes à coopérer avec lesdits moyens d'extension (18) pendant ledit mouvement de retour et ledit mouvement de chute desdits moyens d'extension (18), de sorte que lesdits moyens d'extension (18) soient efficacement et correctement supportés pendant la phase initiale dudit mouvement de chute, pendant la phase finale dudit mouvement de retour et lorsque ils assument nouveau les dimensions globales desdits moyens de support (2) pour positionner lesdits moyens de motorisation (3) pendant une période déterminée dans la position non opérationnelle.

8. Dispositif (1) selon l'une des revendications 3 à 7, **caractérisé en ce que** lesdits moyens d'extension (18) comprennent un premier bras mécanique télescopique (26) et un deuxième bras mécanique télescopique (27) égaux l'un à l'autre et espacés parallèlement les uns des autres selon une distance prédéterminée (L), munis d'une extrémité inférieure (26a, 27a) et couplés par lesdits moyens de jonction (20) auxdits moyens de motorisation (3) et avec une extrémité supérieure (26b, 27b) couplés par lesdits moyens à charnière (19) avec lesdits moyens de support (2).

9. Dispositif (1) selon la revendication 8, **caractérisé en ce que** lesdits bras mécaniques télescopiques (26, 27) sont agencés selon:
- une direction horizontale commune (X) lorsque lesdits moyens de motorisation (3) prennent ladite position non opérationnelle;
- une direction oblique commune (Z) qui définit avec ladite direction horizontale (X) un angle obtus interne lorsque lesdits moyens de motorisation (3) prennent ladite position opérationnelle, ledit angle obtus interne étant tourné vers ladite roue arrière (54) de ladite bicyclette (50).

10. Dispositif (1) selon la revendication 8, s'elle dépend de la revendication 5,
**caractérisé en ce que** lesdits moyens à charnière (19) comprennent un rouleau d'actionnement (31) muni d'extrémités fixées par des moyens tournants (32) par rapport aux parois latérales internes (5a, 5b) mutuellement opposées audit boîtier (5) en forme de boîte et définissent un axe linéaire (Y) apte à être parallèle au moyeu (58) de ladite roue arrière (54) de ladite bicyclette (50), lorsque lesdits moyens de support (2) sont couplés à ladite partie arrière (51) dudit châssis de support (53), ledit rouleau d'actionnement (31) tournant autour dudit axe linéaire (Y) lorsque lesdits moyens de motorisation (3) passent de ladite position non opérationnelle à ladite position opérationnelle et inversement.

11. Dispositif (1) selon la revendication 10, **caractérisé en ce que** lesdits premiers moyens de limite linéaires (21) comprennent:
- une paire de bouchons de fermeture (33, 34) dont chacun est pourvu d'une tête profilée (35) faisant saillie axialement de ladite extrémité supérieure (26b, 27b) de l'un desdits bras mécaniques télescopiques (26, 27), par rapport à celui qui présente une section transversale plus grande et avec une tige linéaire (36) couplée dans ladite extrémité supérieure (19b, 20b) de l'un desdits bras mécaniques télescopiques (26, 27);
- une paire d'épaulements de surface (38, 39) dont chacun entoure un trou traversant (40) qui loge de manière coulissante l'un desdits bras mécaniques télescopiques (26, 27) et est formé dans ledit rouleau opérationnel (31), de manière à définir un siège de surface (41) dans lequel est logée ladite tête profilée (35) desdits bouchons de fermeture (33, 34).

12. Dispositif (1) selon la revendication 10,
**caractérisé en ce que** lesdits deuxièmes moyens de limite linéaires (22) comprennent:
- une paire de dents de contact (42, 43) dont chacune fait saillie de la paroi extérieure (26d, 27d) de l'un desdits bras mécaniques télescopiques (26, 27) dans la zone intermédiaire (26c, 27c) desdits bras mécaniques télescopiques (26, 27);
- la surface externe (31a) dudit rouleau opérationnel (31) contre laquelle lesdites dents de contact (42, 43) contrastent dans ladite position non opérationnelle desdits moyens de motorisation (3).

13. Dispositif (1) selon la revendication 8, si elle dépend de la revendication 7,
**caractérisé en ce que** lesdits moyens de guidage (25) comprennent une paire d'éléments tubulaires linéaires (44, 45), contenus à l'intérieur dudit boîtier (5) en forme de boîte, fixé auxdites parois latérales internes (5a, 5b) dudit boîtier (5) en forme de boîte et espacés parallèlement les uns des autres, avec une distance égale à ladite distance prédéterminée (L), qui sépare lesdits bras mécaniques télescopiques (26, 27) qui, dans ladite position non opérationnelle, sont contenus dans lesdits éléments tubulaires linéaires (44, 45).

14. Dispositif (1) selon l'une des revendications précédentes, **caractérisé en ce que** ledit moteur électrique (46) desdits moyens de motorisation (3) est apte à être entraîné en rotation autour d'un axe longitudinal (Y¹) dans une direction de rotation opposée au sens de rotation de ladite roue arrière (54) de ladite bicyclette (50).

15. Dispositif (1) selon la revendication 14, **caractérisé en ce que** ledit moteur électrique (46) est contenu dans un corps de protection tubulaire (47) à partir duquel les bords latéraux opposés (47a, 47b) font saillie des broches (48, 49) de l'arbre de transmission de mouvement et dont la surface extérieure (47c), qui coopère avec ladite roue arrière (54) de ladite bicyclette (50), lorsque lesdits moyen de motorisation (3) prennent ladite position opérationnelle, est effilé par lesdits bords latéraux (47a, 47b) vers la zone centrale (47d), afin de maintenir ladite roue arrière (54) de ladite bicyclette (50) fermement en contact avec ledit moteur électrique (46).

16. Bicyclette (50) comprenant:
- un châssis de support (53) constitué d'une partie arrière (51) et d'une partie avant (52);
- au moins une roue arrière (54) et au moins une roue avant (55) fixées audit châssis de support (53) et adaptées pour faire appui sur une surface de déplacement;
- un dispositif (1) de propulsion électrique selon la revendication 1, couplé audit châssis de support (53) .
